# EUROPEAN PATENT APPLICATION

(11) **EP 1 020 745 A2**
(43) Date of publication of application: **19.07.2000**
(21) Application number: 99310554.3
(22) Date of filing: 23.12.1999
(51) Int. Cl.: G02B 6/38

(54) **An MT RJ compatible fiber optic connector having a substantially cylindrical ferrule**

(30) Priority: 31.12.1998 US 224034
(71) Applicant: Siecor Operations, LLC, Hickory, NC 28603-0489 (US)
(72) Inventor: Szentesi, Otto I., NW Hickory, NC 28601 (US); Giebel, Markus A., Hickory, NC 28601 (US); Knecht, Dennis, Hickory, NC 28601 (US); Luther, James P., Hickory, NC 28601 (US)
(74) Representative: Bubb, Antony John Allen

(57) **Abstract**

An MT RJ compatible fiber optic connector (10) having a substantially cylindrical ferrule (14) is provided that can be mated with conventional MT RJ connectors and conventional SC DC connectors as well as other MT RJ compatible connectors. Additionally, the MT RJ compatible fiber optic connector (10) can be selectively configured as a male connector or a female connector. The MT RJ compatible fiber optic connector (10) includes a substantially rectangular housing (12) and the substantially cylindrical ferrule (14) operably connected to the housing (12) such that a forward portion of the ferrule (14) is exposed through a forward end (12b) of the housing. The MT RJ compatible fiber optic connector can also include at least one conversion component (32) adapted to be selectively mounted proximate the forward portion of the substantially cylindrical ferrule (14) to convert the female configuration of the MT RJ compatible fiber optic connector into a male configuration without having to remove any components from the female configuration of the MT RJ compatible fiber optic connector.

## Description

The present invention relates generally to fiber optic connectors and, more particularly, to multifiber connectors having a substantially cylindrical ferrule that are compatible with an MT RJ fiber optic connector.

Multifiber cables or ribbons are being increasingly employed in a wide variety of applications. As such, several standard multifiber connectors have been developed and are commonly employed. Perhaps one of the most common multifiber connectors is the MT RJ connector having a rectangularly-shaped MT ferrule developed by Nippon Telegraph & Telephone Corporation of Tokyo, Japan. However, another common multifiber connector is the SC DC connector having a substantially cylindrical DC ferrule developed by Siecor Corporation of Hickory, North Carolina.

Since the SC DC connector does not include guide pins that would extend beyond the end surface of the DC ferrule, the SC DC connector can be advantageously assembled prior to polishing the end surface of the DC ferrule. In this regard, the post-assembly polishing of an SC DC connector is facilitated by the accessibility of the cylindrical exterior surface of the DC ferrule that is formed to within extremely tight tolerances and that serves as a polishing datum or point of reference during polishing operations.

In contrast to the SC DC connector that has a single configuration, the MT RJ connector has two configurations, namely, a male configuration that includes a pair of guide pins extending outwardly beyond the forward end of the MT ferrule and a female configuration that does not include guide pins but that defines a pair of guide pin holes. As known to those skilled in the art, the two configurations are necessary since in order to mate a pair of MT RJ connectors, the guide pins of a male MT RJ connector are inserted into the guide pin holes of a female MT RJ connector. In order to retain the guide pins in the male configuration of the MT RJ connector, each MT RJ connector generally includes a pin keeper. The pin keeper is typically positioned immediately rearward of the MT ferrule within the connector housing such that the guide pins extend through the guide pin holes defined by the MT ferrule and outwardly beyond the forward end of the MT ferrule. Thus, the guide pins of the male configuration of an MT RJ connector must be inserted during the factory assembly process and cannot be inserted in the field once the remainder of the MT RJ connector has been assembled. As a result, the female configuration of an MT RJ connector cannot be converted to a male configuration in the field by merely inserting guide pins through the guide pins holes defined by the MT ferrule since the guide pins will not be appropriately grasped by the pin keeper.

Field technicians must therefore maintain an inventory of MT RJ connectors in both the male configuration and the female configuration since the MT RJ connectors cannot be converted or otherwise altered in the field. Additionally, the MT RJ and SC DC connectors cannot currently be directly connected. As such, technicians must also generally maintain and carry an inventory of each type of connector while in the field.

In addition, the end surface of an MT ferrule must be polished prior to assembling the MT RJ connector since the shoulder defined by the enlarged rear portion of the MT ferrule is used as a point of reference during the polishing process and is inaccessible once the MT RJ connector, including the connector housing and the other components, has been assembled. With respect to the male configuration of the MT RJ connector, the insertion of the guide pins through the guide pin holes defined by the MT ferrule during the assembly process would also serve to prevent the forward end of the MT ferrule from being polished following the assembly process since the guide pins would extend therebeyond. Since the forward end of the MT ferrule is polished prior to the assembly process, the assembly process must be carefully monitored to prevent inadvertent contact or damage to the forward end of the MT ferrule that could damage or otherwise disadvantageously affect the polished surface.

As described above, several conventional multifiber connectors have been designed. Although these multifiber connectors are widely employed, a need still exists for a multifiber connector that is capable of being configured to mate with different ones of the conventional multifiber connectors and that is capable of being converted between male and female configurations in the field in order to reduce the inventory that must be carried by field technicians. In addition, a need exists for a multifiber connector that can be assembled prior to polishing and prior to the insertion of guide pins in order to facilitate the fabrication process.

According to one advantageous embodiment of the present invention, an MT RJ compatible fiber optic connector having a substantially cylindrical ferrule, such as a DC (2 fiber ferrule from Siecor Corporation) or a QC ferrule (4 fiber ferrule from Siecor Corporation), is provided. In addition to the substantially cylindrical ferrule, the MT RJ compatible fiber optic connector of this embodiment includes a housing that at least partially surrounds the ferrule and that has a substantially retangular shape in lateral cross-section such that the fiber optic connector is compatible with an MT RJ connector. As a result of its design, the fiber optic connector of the present invention can therefore be mated via an appropriate sleeve with several different types of conventional fiber optic connectors, including MT RJ connectors and SC DC connectors. Additionally, the fiber optic connector of one advantageous embodiment of the present invention is gender convertible. In this regard, the fiber optic connector can also include a conversion component that carries a guide pin and that can be mounted proximate a forward portion of the ferrule so as to convert a female fiber optic connector into a male fiber optic connector without having to remove any components from the female fiber optic connector. By utilizing the fiber optic connector of the present invention, a technician can therefore reduce the inventory that must be carried in the field since the same fiber optic connector can be selectively configured to mate with different types of fiber optic connectors and to have either male or female configurations. As described below, the fiber optic connector of the present invention can also be assembled prior to polishing and prior to the insertion of conversion components in order to facilitate the fabrication process.

With respect to the embodiment in which the gender of the fiber optic connector is selectively configurable, each conversion component includes a conversion body having interior and exterior side surfaces. The conversion body preferably defines a lengthwise extending channel opening through the interior side surface and having a substantially semicircular shape in lateral cross-section for receiving a portion of the substantially cylindrical ferrule once the conversion component is mounted proximate the forward portion of the ferrule. Each conversion component also includes a guide pin extending beyond the forward end of the conversion body. In particular, the guide pin extends lengthwise through the channel defined by the conversion body so as to be received within the respective alignment groove defined by the ferrule once the conversion component is mounted proximate the forward portion of the ferrule. As such, a female fiber optic connector can be convened to a male fiber optic connector by mounting one or more conversion components proximate the forward portion of the substantially cylindrical ferrule.

Typically, the substantially cylindrical ferrule defines at least two alignment grooves extending lengthwise along opposite sides of the ferrule. As such, the gender convertible fiber optic connector of this embodiment preferably includes a pair of conversion components mounted proximate the opposite sides of the forward portion of the ferrule to thereby convert a female fiber opuc connector into a male fiber optic connector.

Each conversion component also preferably includes a connector for connecting the conversion body to the housing at a location proximate the forward portion of the ferrule. In this regard, the connector can include at least one latch member extending outwardly from an exterior side surface of the conversion body. The latch member of this embodiment is therefore capable of being disposed within a respective slot defined by the housing so as to couple the conversion component to the housing.

In order to fabricate the gender convertible fiber optic connector of this embodiment of the present invention and to selectively configure the fiber optic connector to be a female fiber optic connector or a male fiber optic connector, the ferrule is initially mounted upon a plurality of optical fibers such that the end portions of the optical fibers are exposed at the forward end of the ferrule. The ferrule is then at least partially mounted within the housing such that the rear portion of the ferrule is disposed within the housing and the forward portion of the ferrule is exposed at a forward end of the housing. The forward end of the ferrule and the exposed end portions of the fibers can then be polished. In this regard, the polishing of the forward end of the ferrule and the exposed end portions of the optical fibers is facilitated since the exterior surface of the ferrule that serves as a polishing datum is readily accessible even after assembly of the ferrule in the housing. Moreover, the forward end of the housing can define a plurality of elongate slots to further permit access to the exterior surface of the ferrule during polishing operations. As such, the ferrule can be mounted upon the optical fibers, the ferrule and the housing can be assembled, and the forward end of the ferrule can be polished during factory assembly of the fiber optic connector. At this juncture of the assembly process, a female fiber optic connector has been fabricated and can be utilized as desired. In one advantageous embodiment, for example, a substantially cylindrical ferrule, such as a DC ferrule, is mounted within a substantially rectangular housing, such as the housing of an MT RJ connector, in order to form a female fiber optic connector that can be mated, via an appropriate sleeve, with different types of fiber optic connectors, such as with conventional MT RJ connectors and SC DC connectors.

Once in the field, however, the female fiber optic connector can be readily configured or converted to be a male fiber optic connector. In this regard, a technician can mount at least one and, more typically, a pair of conversion components proximate the forward end of the substantially cylindrical ferrule. For example, the conversion components can be connected to or latched to the housing so as to be held proximate the forward end of the ferrule in order to form a male fiber optic connector. According to this aspect of the present invention, the conversion process is simplified since the technician need not remove any components from the female connector in order to convert the female connector to the male connector. Instead, the technician need merely mount at least one and, more typically, a pair of conversion components proximate the forward end of the ferrule to convert the female fiber optic connector to a male fiber optic connector. As described in conjunction with the female fiber optic connector, the male fiber optic connector of one advantageous embodiment can therefore be mated, via an appropriate sleeve, with different types of fiber optic connectors, such as with both conventional MT RJ connectors and SC DC connectors. As such, the fiber optic connector of the present invention permits a technician to reduce the inventory that must be carried in the field since the same fiber optic connector can be selectively configured to mate with different types of fiber optic connectors and to have either male or female configurations.

### BRIEF DESCRIPTION OF THE DRAWINGS

Figure 1 is an exploded perspective view of an MT RJ compatible fiber optic connector according to one embodiment of the present invention.

Figure 2 is a perspective view of an MT RJ compatible fiber optic connector of one embodiment of the present invention and an alignment sleeve adapted to mate the MT RJ compatible fiber optic connector with a conventional MT RJ connector.

Figure 3 is an exploded perspective view of an alignment sleeve adapted to mate a pair of MT RJ compatible fiber optic connectors according to the present invention.

Figures 4a and 4b are perspective views from opposite ends of an alignment sleeve adapted to mate an MT RJ compatible fiber optic connector according to the present invention and a conventional SC DC connector.

Figure 5 is a partially exploded perspective view of an MT RJ compatible fiber optic connector of another embodiment of the present invention in which the substantially cylindrical ferrule and the housing have been assembled and one of the conversion components has been exploded for purposes of illustration.

Figure 6 is an end view of the male configuration of the gender convertible fiber optic connector of the embodiment of the present invention illustrated in Figure 5 following the assembly process.

Figure 7 is a perspective view of a female conversion component according to one embodiment of the present invention.

Figure 8 is an end view of the female configuration of the gender convertible fiber optic connector of one embodiment of the present invention that includes a pair of the female conversion components of Figure 7.

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

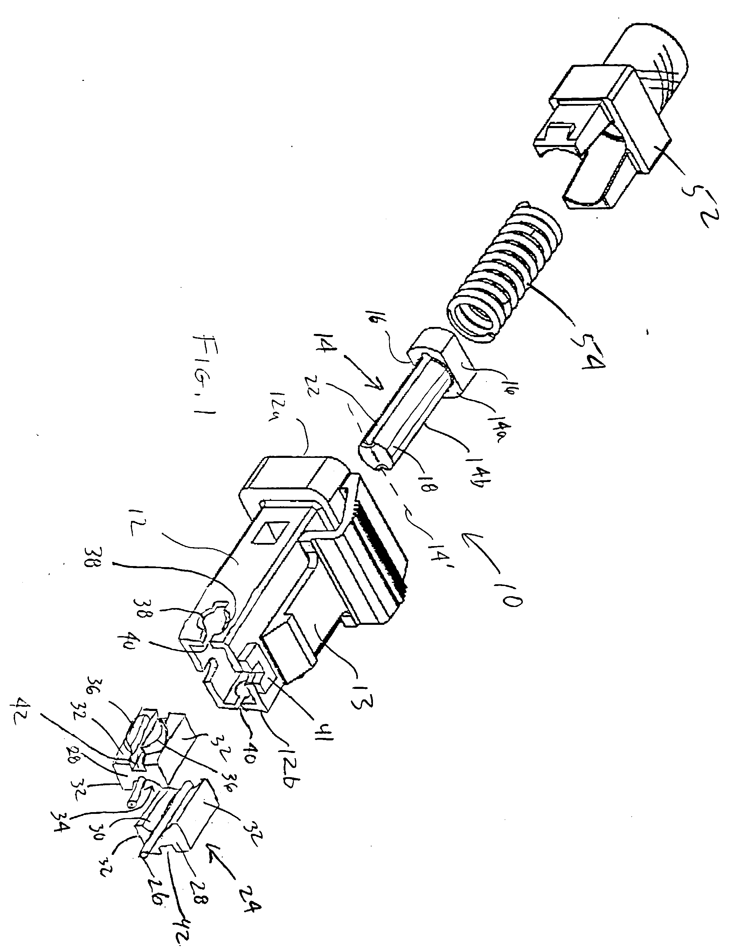

Referring now to Figure 1, an MT RJ compatible fiber optic connector **10** according to one embodiment of the present invention is illustrated. The MT RJ compatible fiber optic connector includes a housing **12** and a substantially cylindrical ferrule **14** operably connected to the housing. The housing is generally formed of a plastic material so as to define a lengthwise extending passageway having a cross-sectional size that decreases from the rear end **12a** of the housing toward the front end **12b** of the housing, typically in a step-wise fashion. While the interior of the ferrule is modified to accept and retain a substantially cylindrical ferrule, the exterior shape and dimensions of the housing and, in particular, the exterior shape and dimensions of the front end of the housing are preferably the same as the exterior shape and size of the housing of a conventional MT RJ connector as defined by FOCIS 12, Fiber Optic Plug Intermatability Standard, Type MT-RJ (PN-4172, to be TIA/EIA-604-12), the contents of which are incorporated herein by reference. As shown in Figure 1, the exterior of the front end of the housing therefore has a substantially rectangular shape in lateral cross-section. As used herein, a substantially rectangular housing is intended to include all generally rectangular housings including those generally rectangular housings having chamfered corner portions, one or more grooves **40** and/or one or more outwardly extending keys **41**, as illustrated in Figure 1 and as described hereinbelow. The housing can also include a latch **13**, such as an RJ latch depicted in the illustrated embodiment, for mechanically engaging an alignment sleeve, outlet or other receptacle.

Unlike conventional MT RJ fiber optic connectors, the MT RJ compatible fiber optic connector **10** of the present invention includes a ferrule **14** that is substantially cylindrical. Although the MT RJ compatible fiber optic connector of the present invention can include a variety of substantially cylindrical ferrules, the ferrule of one advantageous embodiment is a multifiber ferrule, such as a DC or QC ferrule. In single mode applications, the ferrule is typically formed of heavy glass filled thermoset materials, while, in multi-mode applications, the ferrule is typically formed of heavy glass filled thermoplastic materials. As shown, the ferrule typically has an enlarged rear portion **14a** and an elongate, substantially cylindrical forward portion **14b**. In order to reduce the cross-sectional size of the ferrule and, more particularly, the height of the ferrule, the enlarged rear portion of the ferrule can include a pair of flats **16** that extend parallel to each other and to the plane **14'** defined by the plurality of optical fibers upon which the ferrule will be mounted. As also depicted by Figure 1, the opposed side surfaces of the ferrule can also include lengthwise extending flattened portions **18** that also extend parallel to the plane defined by the optical fibers upon which the ferrule will be mounted. As such, the overall cross-sectional dimensions of the ferrule are reduced relative to conventional cylindrical ferrules in order to enable the ferrule to be mounted within a housing **12** that is smaller than the housing for conventional SC DC connectors and, more particularly, to be mounted within a housing having the same exterior dimensions and shape as the housing of a conventional MT RJ connector.

The enlarged rear portion **14a** of the ferrule **14** can include a notch or key element for aligning the ferrule within the housing. In this regard, the ferrule and the housing are assembled by inserting the ferrule through the rear end **12a** of the housing such that the forward portion of the ferrule is exposed through an opening defined by the front end **12b** of the housing, while the enlarged rear portion of the ferrule is retained within the housing. By engaging the notch defined by the enlarged rear portion of the ferrule with a corresponding key within the housing, the ferrule and the housing can be accurately aligned.

As shown in Figure 1, the forward portion of the ferrule **14** also preferably defines at least one and, more typically, a pair of lengthwise extending alignment grooves **22** opening outwardly through the exterior surface of the ferrule. In those embodiments in which the ferrule defines a pair of lengthwise extending alignment grooves, the alignment grooves typically extend lengthwise along diametrically opposed sides of the ferrule. However, the ferrule can define alignment grooves that are positioned differently and can define different numbers of alignment grooves, if so desired. Although not necessary for the practice of the present invention, a portion of each alignment groove proximate the forward end of the ferrule can be scalloped as shown in Figure 1. By scalloping the forward end of each alignment groove, the ferrule of the present invention reduces pin stubbing and eliminates the sharp edge that could chip upon contact with a guide pin. As used herein, a substantially cylindrical ferrule is therefore intended to include all ferrules having a generally cylindrical shape including generally cylindrical ferrules having alignment grooves and flattened portions as shown in Figure 1. As will be apparent, ferrules having other cross-sectional shapes (e.g., oval, rectangular, square, etc.) may be used, as long as they have the alignment grooves and space between the ferrule and the housing for the conversion components, described below.

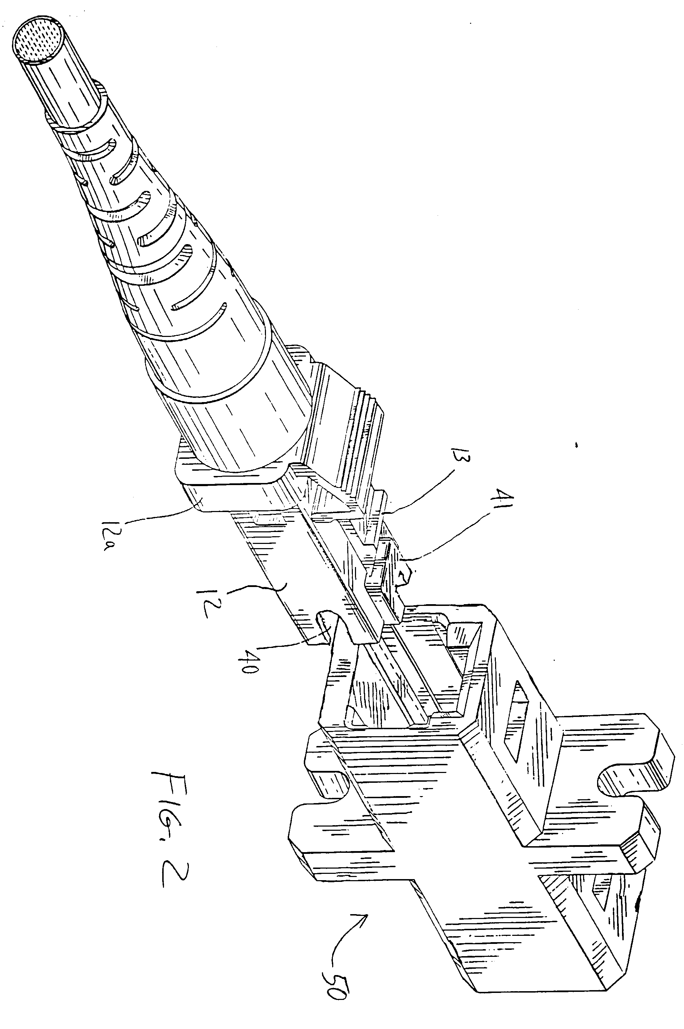

Once the ferrule **14** and the housing **12** have been assembled as described in more detail hereinbelow, the female configuration of MT RJ compatible fiber optic connector **10** is formed. Although the MT RJ compatible fiber optic connector of the present invention includes a substantially cylindrical ferrule, the female configuration of the MT RJ compatible fiber optic connector, including the substantially rectangularly shaped housing **12**, can be mated with a conventional male MT RJ fiber optic connector by inserting the fiber optic connectors into the opposite ends of an alignment sleeve **50**, such as the alignment sleeve depicted in Figure 2 and described by U.S. Patent Application Serial No. 09/118,440, filed July 17, 1998 and assigned to Siecor Operations, LLC, the assignee of the present invention. As such, the guide pins of the male MT RJ fiber optic connector will engage corresponding alignment grooves **22** defined by the substantially cylindrical ferrule of the MT RJ compatible fiber optic connector so as to align the fiber optic connectors.

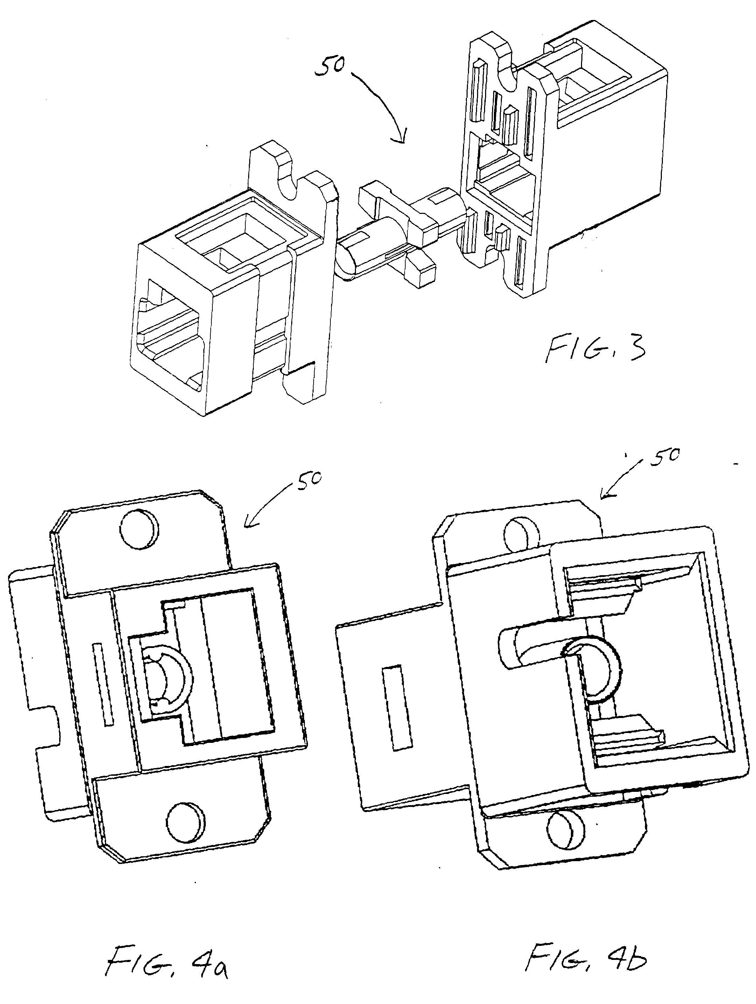

In addition to being compatible with conventional MT RJ fiber optic connectors, the female configuration of the MT RJ compatible fiber optic connector **10** of the present invention can be mated and aligned with another MT RJ compatible fiber optic connector by inserting the MT RJ compatible connectors into the opposite ends of an alignment sleeve **50**, such as shown in an exploded view in Figure 3. Furthermore, the female configuration of the MT RJ compatible fiber optic connector of the present invention can be mated with an SC DC fiber optic connector by inserting the female configuration of the MT RJ compatible fiber optic connector and the SC DC fiber optic connector into the opposite ends of an alignment sleeve as shown in Figures 4a and 4b. In this regard, Figure 4a depicts the end of the alignment sleeve that is adapted to receive the MT RJ compatible fiber optic connector, while Figure 4b depicts the end of the alignment sleeve that is adapted to receive the SC DC fiber optic connector. As a result of its versatility, the MT RJ compatible fiber optic connector can therefore reduce the number of different types of connectors that a technician must carry since the MT RJ compatible fiber optic connector can be mated with several different types of fiber optic connectors, including both conventional MT RJ connectors and conventional SC DC connectors.

According to one advantageous aspect of the present invention, the female configuration of the MT RJ compatible fiber optic connector **10** having a substantially cylindrical ferrule **14** can be readily converted or reconfigured to be the male configuration of the MT RJ compatible fiber optic connector. As shown in Figure 1, the MT RJ compatible fiber optic connector of the present invention can therefore also include at least one male conversion component **24** and, more typically, a pair of male conversion components that include guide pins **26** and that are adapted to be selectively mounted proximate at least the forward portion of the substantially cylindrical ferrule. As such, the female configuration of an MT RJ compatible fiber optic connector of the present invention can therefore be converted into the male configuration of the MT RJ compatible fiber optic connector by merely adding the male conversion components without removing any components from the female configuration of the MT RJ compatible fiber optic connector.

According to the present invention, each conversion component **24** includes a conversion body **28** that is typically formed of a plastic material. The conversion body has an interior side surface **30** that will face the ferrule **14** following mounting of the conversion component. In addition, the conversion body includes a plurality of exterior side surfaces **32** that will generally face the housing **12** following mounting of the conversion components.

The conversion body **28** also defines a lengthwise extending channel **34** opening through the interior side surface **30** and having a substantially semicircular shape in lateral cross-section. In particular, the conversion body defines a lengthwise extending channel that has a shape that substantially matches the shape of the forward portion of the ferrule **14** such that the conversion body can be snugly mounted adjacent the forward portion of the ferrule.

As shown in Figure 1, the male conversion component **24** also includes a guide pin **26** extending beyond the forward end of the conversion body **28**. In one embodiment, the guide pin is integrally molded with the conversion body and is therefore formed of a thermoset or thermoplastic material. Alternatively, the guide pin, such as a stainless steel guide pin, can be secured to the conversion body after the conversion body has been molded, such as by at least partially embedding the guide pin in the conversion body. With respect to a conversion body that is injection molded, for example, the mold can define a lengthwise extending groove opening into the channel **34** defined by the conversion body. After removing the conversion body from the mold, the guide pin can therefore be inserted into the groove and secured by means of an adhesive or the like. Although the guide pin of this embodiment can be embedded to different depths within the conversion body, the guide pin is typically embedded to a depth that is approximately equal to the radius of the guide pin, such that about one-half of each guide pin is embedded within the conversion body and about one-half of each guide pin extends into the lengthwise extending channel defined by the conversion body. Regardless of the type of guide pin or the manner in which the guide pin is secured to the conversion body, the portion of each guide pin that extends into the lengthwise extending channel defined by the conversion body is approximately equal in size and shape to the respective alignment groove **22** defined by the ferrule **14** such that the guide pin will be snugly received within the respective alignment groove.

Upon mounting the male conversion component **24**, the guide pin **26** will engage a respective alignment groove **22** defined by the ferrule **14** in order to align the conversion component and the ferrule. In addition, the conversion component preferably engages the housing **12** in order to mechanically couple the conversion body **28** and the housing. In this regard, the conversion component also preferably includes a connector for connecting the conversion body to the housing. While the conversion component can include a variety of connectors for connecting the conversion body to the housing, the conversion component of one advantageous embodiment includes one or more latch members **36** for engaging corresponding recesses **38** defined by the housing.

In more detail, the housing **12** of one advantageous embodiment includes a plurality of elongate slots **40** opening through the forward end **12b** of the housing. In addition, each conversion component **24** of this embodiment can include at least one and, more commonly, a pair of latch members **36** extending outwardly from an exterior side surface **32** of the conversion body **28** and sized to be slid through a respective elongate slot defined by the housing and engaged by a corresponding recess **38**. As shown in Figure 1, each latch member can include a semicircular member extending outwardly from the conversion body so as to be slid through an elongate slot and engaged within a corresponding semicircular recess. As shown, the conversion body of this embodiment can also define a lengthwise extending groove **42** between the latch members so as to facilitate slight flexure of the latch members in a direction towards one another as the conversion body is inserted into and slid through the respective slot. Once the semicircular latch members have snapped into the respective semicircular recesses defined by the forward portion of the housing, however, the respective conversion component will be securely mechanically engaged to the housing and held in a position proximate the forward end of the ferrule.

As will be apparent, the conversion component **24** can include other types of connectors for connecting the conversion body **28** to the housing **12**, including other types of latch members **36** without departing the spirit and scope of the present invention. Alternatively, the conversion component 24 could have smooth sides (rather than latch members 36) and be connected to the housing 12 with an adhesive.

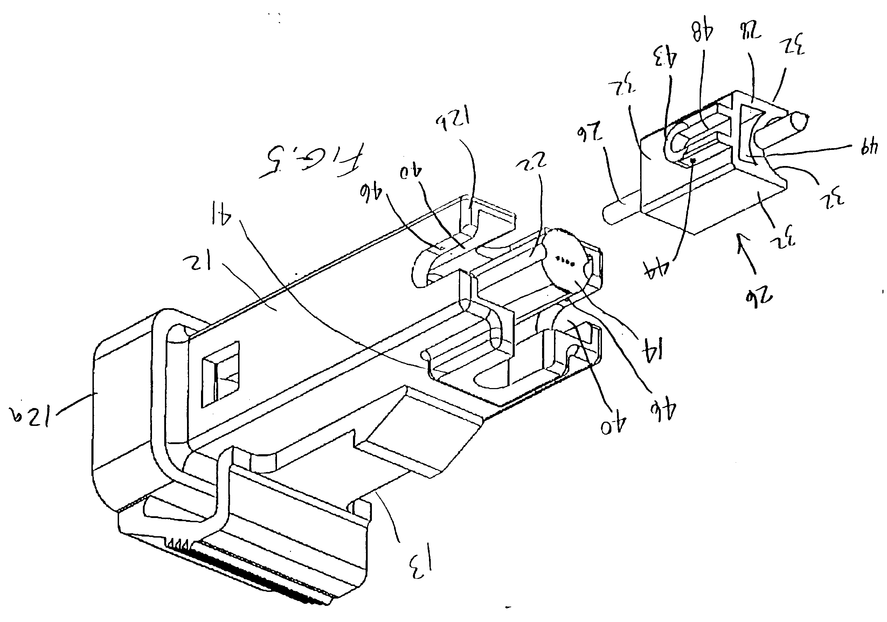

As shown in Figure **5**, for example, the conversion component can include a generally U-shaped member **43** extending outwardly from an exterior side surface **32** of the conversion body. The U-shaped member is sized to be snugly received within a corresponding U-shaped slot **40** defined by the housing and opening through the forward end thereof. As also shown in Figure 5, the U-shaped member includes a pair of projections **44** extending outwardly in opposite directions for engaging corresponding openings **46** defined by the housing. As such the U-shaped member and, in turn, the conversion body can be securely connected to the housing by sliding the U-shaped member through the corresponding slot until the projections engage the respective openings. While the U-shaped member extending outwardly from the exterior side surface of the conversion body can be a solid member having a U-shaped outline, the U-shaped member preferably has a hollow center section **48** to facilitate slight inward flexure of the opposite sides of the U-shaped member as the U-shaped member is inserted into the corresponding slot defined by the housing. In order to further facilitate flexure of the U-shaped member as the U-shaped member is inserted into the corresponding slot defined by the housing, the conversion body can define a hollow interior cavity **49** as also shown in Figure 5.

As the conversion components **24** are being mounted proximate the forward end **14b** of the ferrule **14**, the frictional engagement between the conversion components and the ferrule tends to cause the ferrule to retract within the passageway defined by the housing **12**. In order to limit this retraction, the housing can define an opening, typically through the side of the housing opposite the latch **13**, at a location immediately rearward of the enlarged rear portion **14a** of the ferrule. Although not illustrated, a post or the like can therefore be inserted through the opening prior to mounting the conversion components proximate the forward end of the ferrule in order to engage the rear portion of the ferrule, thereby preventing the ferrule from retracting within the passageway defined by the housing. Once the conversion components have been mounted proximate the forward end of the ferrule, the post or the like can be removed through the opening defined by the housing so as to permit the ferrule to be spring-loaded.

Once the conversion components **24** having respective guide pins **26** have been mounted proximate the forward portion **14b** of the substantially cylindrical ferrule **14**, the female configuration of the MT RJ compatible fiber optic connector will have been effectively converted to a male configuration of the MT RJ compatible fiber optic connector. In this regard, Figure 6 depicts the male configuration of the MT RJ compatible fiber optic connector that results from the mounting of a pair of conversion components as shown in Figure 5 proximate the forward end of the ferrule. As will be apparent from the foregoing description, the conversion process is further facilitated by only requiring that the conversion components be added to the female configuration of the MT RJ compatible fiber optic connector without having to remove any components therefrom.

As described above in conjunction with the female configuration of the MT RJ compatible fiber optic connector **10**, the male configuration of the MT RJ compatible fiber optic connector can be mated, via an appropriate alignment sleeve, with a number of different types of female connectors, including female MT RJ connectors, female SC DC connectors and the female configuration of the MT RJ compatible fiber optic connector. Moreover, by permitting the female configuration of the MT RJ compatible fiber optic connector to be selectively converted to the male configuration, the MT RJ compatible fiber optic connector of the present invention further reduces the number of different types of fiber optic connectors that a technician must carry since the MT RJ compatible fiber optic connector can be mated with a number of different types of connectors and can be selectively configured as either a male or a female connectors.

While the basic female configuration of the MT RJ compatible fiber optic connector **10** that includes a substantially cylindrical ferrule **14** mounted within a substantially rectangular housing **12** but that does not include conversion components **24** is well suited for many applications, including most, if not all, multi-mode applications, another female configuration of the MT RJ compatible fiber optic connector includes conversion components, albeit female conversion components. In this regard, the female configuration of the MT RJ compatible fiber optic connector that includes female conversion components is particularly advantageous for single mode applications in which the conversion components permit the female configuration of the MT RJ compatible fiber optic connector to more securely grasp the guide pins of a male fiber optic connector, thereby providing more precise alignment of the female configuration of the MT RJ compatible fiber optic connector with a male fiber optic connector.

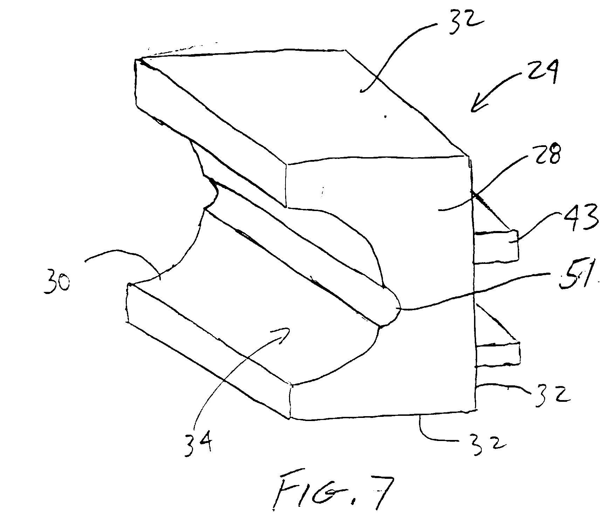

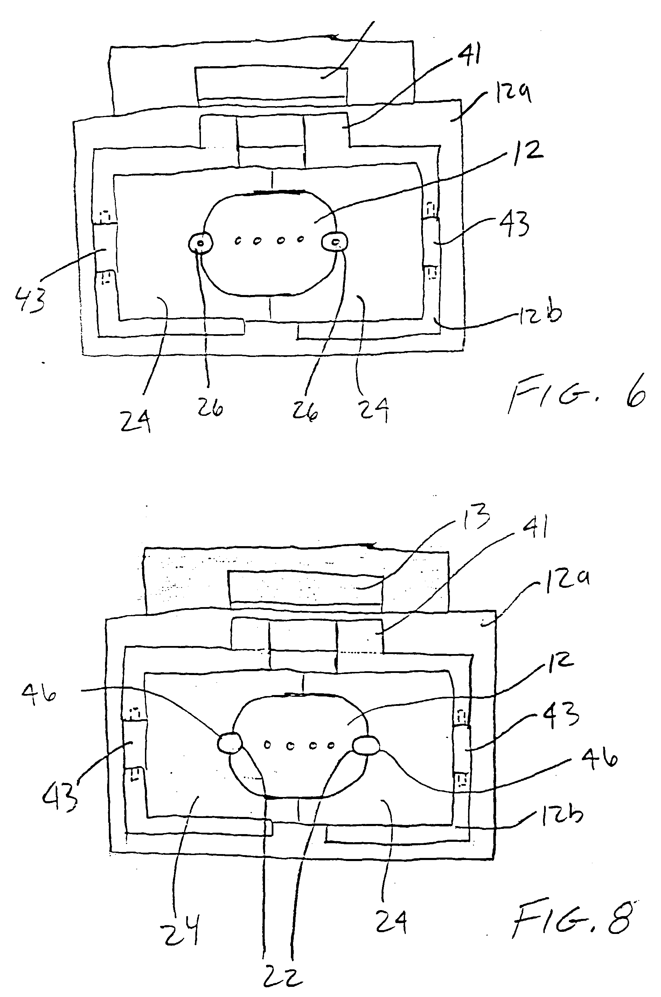

As shown in Figure 7, a female conversion component **24** includes a conversion body **28** as described above in conjunction with the male conversion component. However, the female conversion component does not include a guide pin **26**. Instead, the female conversion component defines a lengthwise extending groove **51** opening into the channel **34** defined by the conversion body. As described above in conjunction with the manufacture of a conversion body for a male conversion component, the lengthwise extending groove opening into the channel defined by the conversion body is typically defined during the process of injection molding the conversion body. The conversion body of a female conversion component preferably defines the lengthwise extending groove to be at the nadir of the channel and to be positioned relative to the conversion body such that the lengthwise extending groove will be aligned with a respective alignment groove **22** of the ferrule **14** once the female conversion component has been mounted proximate the forward portion of the ferrule. As such, the respective alignment groove defined by the ferrule and the lengthwise extending groove defined by the female conversion component can cooperate to define a guide pin opening **46** following mounting of the female conversion component, as shown in Figure 8. While the female conversion component can be connected to the housing **12** as described above in conjunction with the male conversion component, the female conversion component can also be spring-loaded relative to the housing in much the same fashion that the ferrule is spring-loaded.

By mounting a pair of female conversion components **24** proximate the forward portion **14b** of a substantially cylindrical ferrule **14**, another female configuration of the MT RJ compatible fiber optic connector **10** can therefore be formed that defines a pair of guide pin openings **46** for receiving the end portions of a pair of guide pins of a male fiber optic connector in order to more precisely align of the fiber optic connectors during mating. Although the basic female configuration of the MT RJ compatible fiber optic connector that includes a substantially cylindrical ferrule mounted within a substantially rectangular housing **12** but that does not include conversion components is well suited for many applications, including most, if not all, multi-mode applications, the female configuration of the MT RJ compatible fiber optic connector that includes female conversion components is particularly advantageous for single mode applications since the guide pin openings defined by the combination of the ferrule and the conversion components more securely grasp the guide pins of a male fiber optic connector, thereby providing more precise alignment of the fiber optic connectors following mating.

In order to fabricate the MT RJ compatible fiber optic connector **10** of the present invention, the multifiber ferrule **14** is mounted upon a plurality of optical fibers such that the end portions of the optical fibers are exposed through the forward end of the ferrule. The multifiber ferrule is then mounted at least partially within the housing **12** such that the enlarged rear portion **14a** of the ferrule is disposed within the housing while the substantially cylindrical forward portion **14b** of the ferrule is exposed through an opening defined by the front end **12b** of the housing. As shown in Figure 1, a spring keeper **52** and a spring **54** can also be placed upon the optical fibers prior to mounting the ferrule upon the end portions of the optical fibers. As such, the spring keeper and the spring can be slid over the optical fibers and into the passageway defined by the housing after the ferrule has been mounted upon the end portions to the optical fibers and after the ferrule and the housing have been assembled. By sliding the spring keeper along the optical fibers until the spring is somewhat compressed between the spring keeper and the rear portion of the ferrule and by thereafter securing the spring keeper to the housing, such as by means of one or more latches or the like, the spring will be held in a somewhat compressed state between the spring keeper and the rear portion of the ferrule so as to exert a force urging the ferrule forwardly within the housing.

The forward end of the ferrule **14** and the exposed end portions of the optical fibers are thereafter polished. According to this aspect of the present invention, the polishing can be conducted after assembling the ferrule and the housing **12** for at least two reasons. First, the polishing datum or point of reference during polishing operations is generally accessible even after the ferrule and the housing have been assembled since the substantially cylindrical exterior surface of the forward portion **14b** of the ferrule that serves as a polishing datum extends beyond the housing and is exposed following the assembly process. In this same vein, the elongate slots **40** defined by the forward portion of the housing also serve to provide additional access to the exterior surface of the forward portion of the ferrule during polishing operations. Secondly, the forward end of the ferrule and the exposed end portions of the optical fibers can be polished following assembly of the ferrule and the housing since the fiber optic connector **10** does not yet include guide pins that would generally extend beyond the forward end of the ferrule so as to obstruct polishing operations.

After polishing the forward end of the ferrule **14** and the exposed end portions of the optical fibers, the basic configuration of the female configuration of the MT RJ compatible fiber optic connector **10** having a substantially cylindrical ferrule, such as a DC or QC ferrule, has been fabricated and is available for use. For example, the female configuration of the MT RJ compatible fiber optic connector can be mated with a conventional male MT RJ fiber optic connector, with a conventional male SC DC connector or with another MT RJ compatible fiber optic connector by inserting the fiber optic connectors into the opposite ends of an appropriate alignment sleeve, as described above. In instances in which it is desirable to convert the female configuration of the MT RJ compatible fiber optic connector into a male configuration of the MT RJ compatible fiber optic connector, a male conversion component **24** and, more typically, a pair of male conversion components are mounted proximate the forward portion **14b** of the ferrule. Alternatively, female conversion components can be mounted proximate the forward portion of the ferrule in order to create another female configuration of the MT RJ compatible fiber optic connector that defines guide pin openings **46** and that is particularly well suited for single mode applications, as described above.

Since the conversion components **24** are not mounted upon the ferrule **14** until after the assembly and polishing operations are complete, however, the conversion components can be selectively mounted upon the ferrule during field installation of the MT RJ compatible fiber optic connector **10**. As such, both male and female versions of the MT RJ compatible fiber optic connector need not be assembled in the factory and maintained in inventory. Instead, a technician need only maintain an inventory of the basic female configuration of the MT RJ compatible fiber optic connectors as well as conversion components that can be selectively mounted in the field if the technician determines that a particular installation requires a male configuration of the MT RJ compatible fiber optic connector. In this regard, the conversion process of the present invention is further simplified since the technician need not remove any components from the basic female configuration of the MT RJ compatible fiber optic connector, but instead need merely mount the male conversion components in order to form the male version of the MT RJ compatible fiber optic connector.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An MT RJ compatible fiber optic connector comprising:
a housing defining a passageway extending lengthwise between opposed forward and rear ends, said housing including an RJ-type latch; and
a substantially cylindrical ferrule disposed at least partially within the lengthwise extending passageway defined by said housing, said ferrule including a forward portion that is exposed at the forward end of said housing and that defines at least one lengthwise extending alignment groove,
wherein at least the forward end of said housing has a substantially rectangular shape in lateral cross-section such that the fiber optic connector is compatible with an MT RJ connector.

2. An MT RJ compatible fiber optic connector according to Claim 1 further comprising at least one conversion component adapted to be selectively mounted proximate at least the forward end of said substantially cylindrical ferrule to thereby convert a female fiber optic connector to a male fiber optic connector without having to remove any components from the female fiber optic connector.

3. An MT RJ compatible fiber optic connector according to Claim 1 or 2, wherein the forward end of said housing defines a plurality of elongate slots that permit access to said ferrule.

4. An MT RJ compatible fiber optic connector according to any one of Claims 1-3, wherein said ferrule defines at least two alignment grooves extending lengthwise along opposite sides thereof.

5. An MT RJ compatible fiber optic connector according to Claim 4 wherein said substantially cylindrical ferrule is a DC ferrule or a QC ferrule.

6. A gender convertible fiber optic connector comprising:
a housing;
a substantially cylindrical ferrule operably connected to said housing, said ferrule including a forward portion that is exposed through a first end of said housing and that defines at least one lengthwise extending alignment groove; and
at least one conversion component adapted to be selectively mounted proximate at least the forward portion of said substantially cylindrical ferrule,
wherein the fiber optic connector serves as a female fiber optic connector having a substantially cylindrical ferrule prior to mounting said at least one conversion component, and
wherein the fiber optic connector is capable of being converted to serve as a male fiber optic connector by mounting said at least one conversion component without having to remove any components from the female fiber optic connector.

7. A gender convertible fiber optic connector according to Claim 6 wherein each conversion component comprises a conversion body having an interior side surface and an exterior side surface, and wherein said conversion body defines a lengthwise extending channel opening through the interior side surface and having a substantially semicircular shape in lateral cross-section for receiving a portion of said substantially cylindrical ferrule once the conversion component is mounted proximate the forward portion of said ferrule.

8. A gender convertible fiber optic connector according to Claim 7 wherein said conversion component includes a guide pin partially embedded within said conversion body and extending beyond a forward end of said conversion body, said guide pin extending lengthwise through the channel defined by said conversion body so as to be received within a respective alignment groove defined by said ferrule once said conversion component is mounted proximate the forward portion of said ferrule.

9. A gender convertible fiber optic connector according to any one of Claims 6-8, wherein each conversion component is connected to said housing so as to be mounted proximate the forward portion of said ferrule.

10. A gender convertible fiber optic connector according to any one of Claims 6-9, wherein said ferrule defines at least two alignment grooves extending lengthwise along opposite sides thereof, and wherein said at least one conversion component comprises a pair of conversion components mounted proximate the opposite sides of the forward portion of said ferrule.

11. A conversion component for converting a female fiber optic connector having a substantially cylindrical ferrule to a male fiber optic connector, the conversion component comprising:
a conversion body having an interior side surface and an exterior side surface, said conversion body defining a lengthwise extending channel opening through the interior side surface, wherein the channel defined by said conversion body has a substantially semicircular shape in lateral cross-section for receiving a portion of the substantially cylindrical ferrule once the conversion component is mounted proximate a forward end of the ferrule; and
a guide pin extending lengthwise through the channel defined by said conversion body so as to be received within an alignment groove defined by the ferrule once the conversion component is mounted proximate the forward portion of the ferrule to thereby convert the female fiber optic connector to a male fiber optic connector.

12. A conversion component according to Claim 11 further comprising a connector for connecting said conversion body to a housing of the fiber optic connector so as to be mounted proximate the forward portion of the ferrule.

13. A conversion component according to Claim 12 wherein the housing of the fiber optic connector defines a plurality of elongate slots opening through a forward end thereof, and wherein said connector comprises at least one latch member, extending outwardly from a respective exterior side surface of said conversion body, that is capable of being disposed within a respective slot so as to engage the housing of the fiber optic connector.

14. A method of assembling a gender convertible a fiber optic connector comprising the steps of:
mounting a substantially cylindrical ferrule upon a plurality of optical fibers such that end portions of the optical fibers are exposed at a forward end of the ferrule;
positioning the substantially cylindrical ferrule within a housing such that the forward end of the ferrule and the end portions of the optical fibers are exposed through a first end of the housing;
polishing the forward end of the ferrule and the exposed end portions of the optical fibers while the substantially cylindrical ferrule is disposed within the housing to thereby form a female fiber optic connector; and
mounting at least one conversion component proximate at least the forward end of the substantially cylindrical ferrule only if the fiber optic connector is to be converted to a male fiber optic connector such that the fiber optic connector is converted from the female fiber optic connector to the male fiber optic connector by mounting at least one conversion component without having to remove any components from the female fiber optic connector.
